(19) Europäisches Patentamt
European Patent Office
Office européen des brevets

(11) **EP 1 383 231 B1**

(12) **EUROPÄISCHE PATENTSCHRIFT**

(45) Veröffentlichungstag und Bekanntmachung des Hinweises auf die Patenterteilung:
**01.03.2017   Patentblatt 2017/09**

(51) Int Cl.:
**H02P 21/14** *(2016.01)*      **H02P 6/17** *(2016.01)*

(21) Anmeldenummer: **02015956.2**

(22) Anmeldetag: **18.07.2002**

(54) **Verfahren zum Erfassen des magnetischen Flusses der Rotorposition und/oder der Drehzahl**

Method for acquiring the magnetic flux, the rotor position and/or the rotation speed

Méthode de captage du flux magnétique, de la position du rotor et/ou de la vitesse rotative

(84) Benannte Vertragsstaaten:
**AT BE BG CH CY CZ DE DK EE ES FI FR GB GR IE IT LI LU MC NL PT SE SK TR**

(43) Veröffentlichungstag der Anmeldung:
**21.01.2004   Patentblatt 2004/04**

(73) Patentinhaber: **GRUNDFOS A/S**
**DK-8850 Bjerringbro (DK)**

(72) Erfinder: **Vadstrup, Pierre**
**8381 Tilst (DK)**

(74) Vertreter: **Vollmann, Heiko**
**Vollmann & Hemmer**
**Patentanwälte**
**Wallstrasse 33a**
**23560 Lübeck (DE)**

(56) Entgegenhaltungen:
EP-A- 0 784 378      WO-A-01/20751
WO-A-99/65137      US-A- 5 729 102
US-A- 2001 017 529

EP 1 383 231 B1

**Beschreibung**

Die Erfindung betrifft ein Verfahren zum Erfassen des magnetischen Flusses des Rotors, der Rotorposition und/oder der Drehzahl des Rotors in einem Ein oder Mehrphasenpermanentmagnet- oder synchronmotor oder -generator gemäß den im Oberbegriff des Anspruchs 1 angegebenen Merkmalen.

Magnetischer Fluss, Rotorposition und Drehzahl sind durch die an sich bekannten Statorspannungsgleichungen:

$$Gleichung \quad (1) \quad L \cdot \dot{i}_{\alpha} \; = \; -R \cdot i_{\alpha} + p \cdot \omega \cdot \psi_{m\beta} + u_{\alpha}$$

$$Gleichung \quad (2) \quad L \cdot \dot{i}_{\beta} \; = \; -R \cdot i_{\beta} - p \cdot \omega \cdot \psi_{m\alpha} + u_{\beta}$$

in denen

L      die Induktivität

$i_{\alpha}$      der Strom in Richtung $\alpha$

$i_{\beta}$      der Strom in Richtung $\beta$

$\dot{i}_{\alpha}$      *die* zeitliche Ableitung des Stroms in Richtung $\alpha$

$\dot{i}_{\beta}$      *die* zeitliche Ableitung des Stroms in Richtung $\beta$

R      der ohmsche Widerstand

p      die Polpaarzahl

$\omega$      die Drehzahl des Rotors

$\psi_{m\alpha}$      der magnetische Fluss in Richtung $\alpha$ im Rotor

$\psi_{m\beta}$      der magnetische Fluss in Richtung $\beta$ im Rotor

$u_{\alpha}$      die Spannung in Richtung $\alpha$

$u_{\beta}$      die Spannung in Richtung $\beta$ sind, definiert. Wie sich aus diesen Gleichungen ergibt, können die vorgenannten Größen ermittelt werden, wenn Spannung und Strom in den Richtungen $\forall$ und $\exists$ bekannt sind. Letztere können als elektrische Daten in einfacher Weise erfasst werden. Allerdings ist dies nach dem Stand der Technik nur möglich, wenn der Betrag des magnetischen Flusses als konstant angenommen wird, da sonst das Gleichungssystem aufgrund zu vieler Unbekannter nicht eindeutig lösbar ist. Da der magnetische Fluss tatsächlich aber nicht konstant ist, sondern der Betrag über Zeit und Rotorposition variiert, ist dieses bekannte Verfahren fehlerbehaftet, was dazu führt, dass es für den Einsatz im Steuerungs- und Regelungsprozessen des Motors nur bedingt geeignet ist.

Moderne Mehrphasenpermanentmagnetmotoren sind heutzutage häufig mit Leistungselektronik versehen, d. h. die Kommutierung erfolgt elektronisch. Für die Steuerung dieser Kommutierung ist allerdings die Kenntnis der aktuellen Rotorposition von ganz entscheidender Bedeutung, nicht nur um den Motor mit einem hohen Wirkungsgrad betreiben zu können, sondern auch um die empfindlichen Bauteile der Leistungselektronik zu schützen und ein besseres dynamisches Verhalten des Antriebs zu erzielen.

Aus US 2001/0017529 A1 zählt es zum Stand der Technik, durch eine Vektorkontrolle des Motors einen Synchronmotor mittels Pulsweitmodulation zu starten. Allerdings wird dabei der Statorfluss und nicht der Rotorfluss berücksichtigt.

Aus WO 99/65137 A1 zählt es zum Stand der Technik, zur Bestimmung der Rotorstellung eines Synchronmotors den Statorfluss auf der Basis eines Strommodells des Synchronmotors zu bestimmen.

Aus US 5,729,102 A1 ist eine Vektorkontrolle bekannt, mit der die Rotorposition erfasst wird. Eine Erfassung des magnetischen Flusses im Rotor ist dort nicht vorgesehen.

Die Drehzahlmessung kann zwar über eine externe Messanordnung noch vergleichsweise einfach erfolgen. Die exakte Bestimmung der Rotorposition hingegen ist aufwendig.

Andererseits ist man bemüht, diese Werte nach Möglichkeit rechnerisch zu ermitteln, da aufgrund der im Steuer- und Regelteil der Motorelektronik regelmäßig vorhandenen digitalen Elektronik, entsprechende Rechenleistung zur Verfügung steht oder zumindest mit geringem Aufwand zu Verfügung stellbar ist. Entsprechende Programme zur rechnerischen Ermittlung könnten also ohne größeren Aufwand durch Softwareimplementierung integriert werden.

Vor diesem Hintergrund liegt der Erfindung die Aufgabe zugrunde, ein gattungsgemäßes Verfahren zur Erfassung des magnetischen Flusses, der Rotorposition und/oder der Drehzahl des Rotors in einem Ein oder Mehrphasenpermanentmagnet- oder synchronmotor oder -generator zu verbessern.

Diese Aufgabe wird durch die in Anspruch 1 angegebenen Merkmale gelöst. Vorteilhafte Ausgestaltungen der Erfindung sind in den Unteransprüchen sowie der nachfolgenden Beschreibung angegeben.

Grundgedanke der vorliegenden Erfindung ist es, beim Verfahren zum Erfassen der vorgenannten Größen die an sich bekannten Statorspannungsgleichungen einzusetzen, jedoch anders als im Stand der Technik nicht den magnetischen Fluss konstant zu setzen, sondern die Energieverhältnisse in dem Magneten des Rotors mit einfließen zu lassen, um so die vorgenannten Größen, insbesondere die Rotorposition bzw. deren zeitliche Ableitung, die Drehzahl genauer bestimmen zu können.

Die vorliegende Erfindung ist sowohl bei Einphasen- als auch bei Mehrphasenpermanentmagnet- oder -synchronmotoren sowie auch entsprechenden -generatoren anwendbar. Soweit es einphasige Motoren oder Generatoren betrifft, fällt eine der beiden Statorspannungsgleichungen weg. Im Übrigen wird bei zwei oder mehrphasigen Motoren oder Generatoren grundsätzlich mit dem Statorspannungsgleichung für zweiphasige Motoren und Generatoren gerechnet, wobei bei drei- und mehrphasigen Motoren rechnerisch in an sich bekannter Weise auf ein zweiphasiges Modell reduziert bzw. transformiert wird, insofern müssen dann messtechnisch erfasste Werte entsprechend auf ein zweiphasiges Modell umgerechnet werden.

Das vorliegende Verfahren ist insbesondere für Permanentmagnetmotoren vorgesehen, kann jedoch in gleicher Weise auch bei Synchronmotoren oder Generatoren angewendet werden, wobei bei Synchronmotoren oder Generatoren der durch die Rotorspule gebildete Magnet anstelle des Permanentmagneten tritt. Eine Generatoranwendung in diesem Sinne kann auch im Zusammenhang mit der Steuerung von mit Leistungselektronik betriebenen Motoren gegeben sein, wenn diese im Generatorbetrieb ins Netz speisen um die Rotorposition des Netzgenerators zu ermitteln.

Das erfindungsgemäße Verfahren kann auch für Generatoren angewendet werden, beispielsweise bei der Steuerung

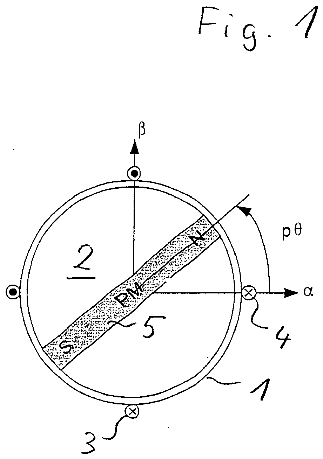

In Fig. 1 ist ein solches Ersatzschaltbild eines zweiphasigen Permanentmagnetmotors dargestellt, es sind zwei um 90° versetzt zueinander angeordneten Phasen $\alpha$ und $\beta$ in einem Stator 1 vorgesehen, die durch zwei Spulen 3 und 4 symbolisiert sind. Innerhalb dieses Stators 1 ist ein Rotor 2 angeordnet, der einen Permanentmagneten 5 mit diametraler Polaritätsverteilung N und S aufweist, der innerhalb des Stators 1 rotierend gelagert ist.

Um die Energieverhältnisse im Magneten 5 des Rotors 2 zu berücksichtigen, werden die folgenden Gleichungen (3) und (4) eingesetzt.

$$Gleichung \quad (3) \qquad \dot{\psi}_{m\alpha} = -p \cdot \omega \cdot \psi_{m\beta}$$

$$Gleichung \quad (4) \qquad \dot{\psi}_{m\beta} = p \cdot \omega \cdot \psi_{m\alpha}$$

*wobei*

$\dot{\psi}_{m\alpha}$     *die zeitliche Ableitung von* $\psi_{m\alpha}$ *und*
$\dot{\psi}_{m\beta}$     *die zeitliche Ableitung von* $\psi_{m\beta}$ *sind.*

Die Besonderheit dieser Rotorenergiegleichungen liegt darin, dass in die zeitliche Ableitung des magnetischen Flusses in $\alpha$ - Richtung der magnetische Fluss in ß - Richtung einfließt und umgekehrt.

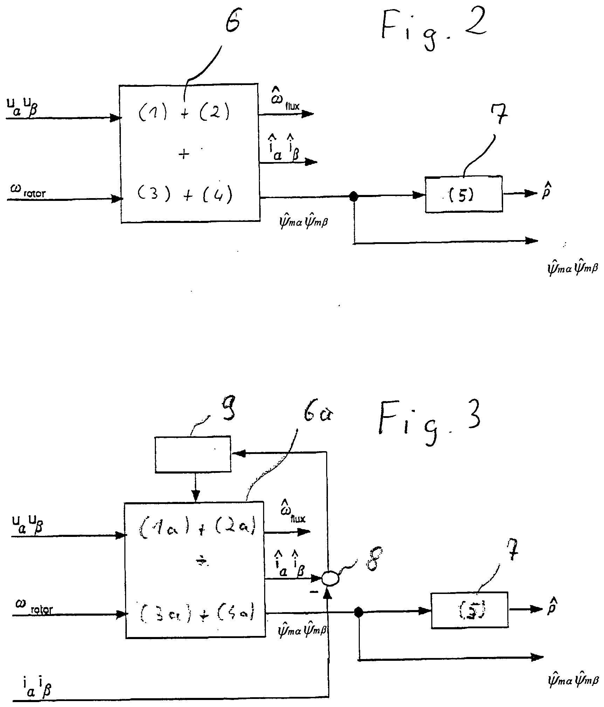

Hierdurch ergibt sich ein rechnerisches Motormodell, mit dem beispielsweise wie anhand von Fig. 2 veranschaulicht, elektrische, magnetische und/oder mechanische Werte des Motors ermittelt werden können.

In den folgenden in den Figuren blockdiagrammmäßig dargestellten Motormodellen ist mit ^ jeweils ein errechneter Wert gekennzeichnet, wohingegen bei den ohne ^ gekennzeichneten Werten es sich um gemessene Werte handelt.

Es versteht sich, dass von den einleitend genannten Größen (magnetischer Fluss, Rotorposition, Drehzahl) jeweils eine ermittelt werden kann, wenn das durch den Block 6 in Fig. 2 symbolisierte Motormodell verwendet wird. Dieses durch den Block 6 symbolisierte Motormodell besteht aus den Gleichungen (1) bis (4), mit denen einer der vorgenannten Werte rechnerisch vergleichsweise genau ermittelt werden kann.

Bei dem Verfahren gemäß Fig. 2 werden die Spannungen $u_\alpha$ und $u_\beta$, d. h. die Statorspannungen in $\alpha$ - und $\beta$ - Richtung gemessen oder anderweitig berechnet oder zur Verfügung gestellt, ebenso $\omega$ die Rotordrehzahl. Diese Größen werden in die Gleichungen (1) bis (4) eingesetzt, so dass rechnerisch die Geschwindigkeit des magnetischen Flusses $\omega_{flux}$, die Motorströme $i_\alpha$ in Richtung $\alpha$ und $i_\beta$ in Richtung $\beta$ sowie der magnetische Fluss $\psi_\alpha$ in Richtung $\alpha$ und $\psi_\beta$ in Richtung $\beta$ ermittelt werden können. Die entsprechend rechnerisch ermittelten Werte sind mit ^ gekennzeichnet:

$$Gleichung \quad (1) \qquad L \cdot \dot{\hat{i}}_\alpha = -R \cdot \hat{i}_\alpha + p \cdot \hat{\omega} \cdot \hat{\psi}_{m\beta} + u_\alpha$$

$$\textit{Gleichung} \quad (2) \quad L \cdot \dot{\hat{i}}_{\beta} \;=\; -\,R \cdot \hat{i}_{\beta} - p \cdot \hat{\omega} \cdot \hat{\psi}_{m\alpha} + u_{\beta}$$

$$\textit{Gleichung} \quad (3) \quad \dot{\hat{\psi}}_{m\alpha} = -\,p \cdot \hat{\omega} \cdot \hat{\psi}_{m\beta}$$

$$\textit{Gleichung} \quad (4) \quad \dot{\hat{\psi}}_{m\beta} = p \cdot \hat{\omega} \cdot \hat{\psi}_{m\alpha}$$

Aus dem magnetischen Fluss $\psi_{\alpha}$ in Richtung $\alpha$ und $\psi_{\beta}$ in Richtung $\beta$ kann dann mittels eines Winkelkalkulators 7, der die geometrische Bezeichnung gemäß

$$\textit{Gleichung} \quad (5) \quad \rho \;=\; \frac{1}{p} \cdot \textit{Arctg} \left( \frac{\psi_{m\beta}}{\psi_{m\alpha}} \right)$$

verwendet, die Position $\rho$ des magnetischen Flusses ermittelt werden. In diesem grundlegenden Motormodell 6 wird die Rotorposition durch Gleichsetzung mit der Position des magnetischen Flusses bestimmt, davon ausgehend, dass diese real stets übereinstimmen.

Da dieses Motormodell 6 in seiner einfachsten Form auch nur eine rechnerische Annäherung an die tatsächlichen Werte darstellt, kann es durch weitere Maßnahmen verbessert werden. Eine solche Verbesserung stellt beispielsweise das anhand von Fig. 3 dargestellte Verfahren dar. Wie die Fig. 3 zeigt, ist auch dort das grundlegende Motormodell 6, bestehend aus den Gleichungen (1) bis (4) zugrunde gelegt, wobei die Statorspannungen u in Richtung $\alpha$ und $\beta$, $u_{\alpha}$ und $u_{\beta}$ sowie die Rotorgeschwindigkeit $\omega$ beispielsweise als gemessene Größen in das Modell einfließen. Im Unterschied zu dem Verfahren nach Fig. 2 wird jedoch im Modell 6a nach Fig. 3 der Statorstrom in $\alpha$- und $\beta$- Richtung, also $i_{\alpha}$ und $i_{\beta}$ zusätzlich erfasst, mit dem durch das Motormodell 6a ermittelten rechnerischen Stromwerten $\hat{i}_{\alpha}$ und $\hat{i}_{\beta}$ durch Subtraktion verknüpft (dies ist in Fig. 3 durch die subtraktorische Verknüpfung 8 dargestellt) und der daraus resultierende Wert einem Korrekturglied 9 zugeführt, der in das Motormodell 6a korrigierend mit einfließt. Auf diese Weise wird ein verfeinertes Motormodell 6a und somit ein verbessertes Verfahren zur Ermittlung der vorgenannten Werte zur Verfügung gestellt, das aus den Gleichungen (1a), (2a), (3a) und (4a) besteht:

$$\textit{Gleichung} \quad (1a) \quad L \cdot \dot{i}_{\alpha} \;=\; -\,R \cdot i_{\alpha} + p \cdot \omega \cdot \psi_{m\beta} + u_{\alpha} + \upsilon_{1\alpha}$$

$$\textit{Gleichung} \quad (2a) \quad L \cdot \dot{i}_{\beta} \;=\; -\,R \cdot i_{\beta} - p \cdot \omega \cdot \psi_{m\alpha} + u_{\beta} + \upsilon_{1\beta}$$

$$\textit{Gleichung} \quad (3a) \quad \dot{\psi}_{m\alpha} = -\,p \cdot \omega \cdot \psi_{m\beta} + \upsilon_{2\alpha}$$

$$\textit{Gleichung} \quad (4a) \quad \dot{\psi}_{m\beta} = p \cdot \omega \cdot \psi_{m\alpha} + \upsilon_{2\beta}$$

*in denen*

$\upsilon_{1a}, \upsilon_{1\beta}, \upsilon_{2\alpha}, \upsilon_{2\beta}$    *Korrekturglieder sind.*

In dem Verfahren gemäß Fig. 3 sind die gemessenen Statorströme in $\alpha$- und $\beta$- Richtung im Vergleich zu den errechneten Strömen in $\alpha$ und $\beta$ Richtung als Korrekturglied vorgesehen. Es versteht sich, dass dies nur beispielhaft zu verstehen ist, es können in gleicher Weise die Motorströme in das Motormodell 6 bzw. 6a einfließen und die Motorspannungen rechnerisch ermittelt und gegebenenfalls durch Vergleich mit den tatsächlichen Spannungen als Korrekturglied einfließen. Es können auch mehrere Korrekturglieder vorgesehen sein, die auf der Basis mehrerer elektrischer Größen aufgebaut sind.

Für das anhand von Fig. 3 beispielhaft dargestellte und vorbeschriebene Verfahren ergeben sich also beispielhaft die folgenden Gleichungen

$$\text{Gleichung} \quad (1a) \quad L \cdot \dot{\hat{i}}_\alpha \;=\; -R \cdot i_\alpha + p \cdot \hat{\omega} \cdot \hat{\psi}_{m\beta} + u_\alpha + \upsilon_{l\alpha}$$

$$\text{Gleichung} \quad (2a) \quad L \cdot \dot{\hat{i}}_\beta \;=\; -R \cdot i_\beta - p \cdot \hat{\omega} \cdot \hat{\psi}_{m\alpha} + u_\beta + \upsilon_{l\beta}$$

$$\text{Gleichung} \quad (3a) \quad \dot{\hat{\psi}}_{m\alpha} = -p \cdot \hat{\omega} \cdot \hat{\psi}_{m\beta} + \upsilon_{2\alpha}$$

$$\text{Gleichung} \quad (4a) \quad \dot{\hat{\psi}}_{m\beta} = p \cdot \hat{\omega} \cdot \hat{\psi}_{m\alpha} + \upsilon_{2\beta}$$

*in denen*

$\upsilon_{1\alpha}, \upsilon_{1\beta}, \upsilon_{2\alpha}, \upsilon_{2\beta}$ *Korrekturglieder sind,*

wobei die Korrekturglieder durch einen Korrekturfaktor und die Differenz der errechneten elektrischen Werte und der gemessenen elektrischen Werte wie folgt gebildet sind:

$$\upsilon_{l\alpha} = K_i \cdot (\hat{i}_\alpha - i_\alpha)$$

$$\upsilon_{2\alpha} = -K_\psi \cdot (\hat{i}_\beta - i_\beta)$$

$$\upsilon_{l\beta} = K_i \cdot (\hat{i}_\beta - i_\beta)$$

$$\upsilon_{2\beta} = K_\psi \cdot (\hat{i}_\alpha - i_\alpha)$$

Wie aus den vorstehenden Gleichungen ersichtlich, werden die Korrekturglieder $\upsilon_2$ so gebildet, dass sie in den Gleichungen (3a) und (4a) in der einen Phase mittels der Differenz zwischen errechneten und gemessenen Strömen der anderen Phase gebildet wird. Die Größen $K_i$ und $K_\psi$ bilden dabei jeweils einen konstanten Faktor.

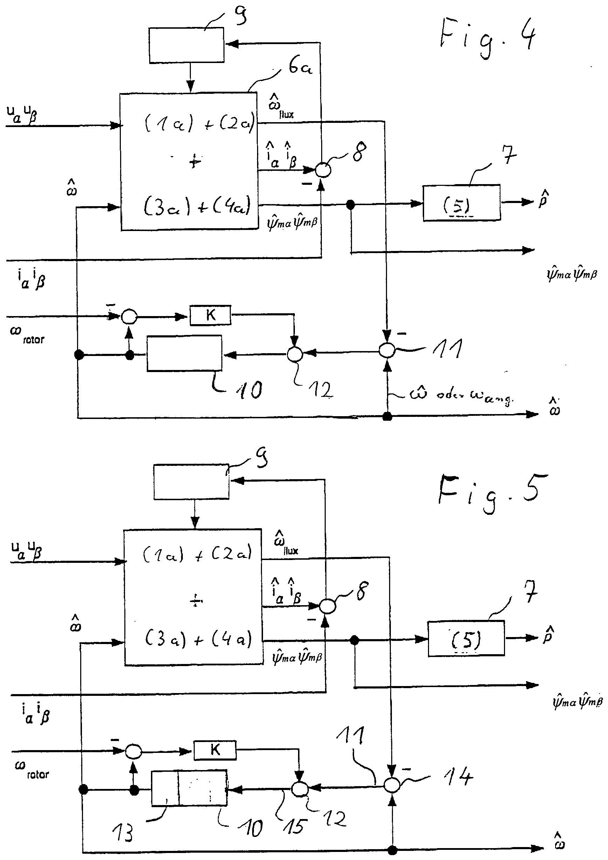

In Fig. 4 ist beispielhaft eine Weiterbildung des erfindungsgemäßen Verfahrens dargestellt, bei dem neben dem korrigierten Motormodell 6a gemäß Fig. 3 noch eine Weiterbildung dahingehend vorgesehen ist, dass die Rotordrehzahl ω rechnerisch ermittelt wird. Bei den Motormodellen gemäß den Fig. 2 und 3 fließt die Rotordrehzahl ω als Eingangsgröße ein. Dann wird die Drehzahl üblicherweise sensorisch erfasst, und zwar vorzugsweise mit Hilfe eines Hallsensors, wie dies an sich auch bekannt ist.

Es gibt jedoch Konstellationen, bei denen auch die Rotordrehzahl rechnerisch ermittelt werden muss oder bei der die sensorisch ermittelten Messwerte nicht hinreichend genau sind oder zeitlich in nur vergleichsweise großen Abständen zur Verfügung stehen. Für diese Fälle ist in einer Weiterbildung der Erfindung ein Adaptionsblock 10 vorgesehen, der mittels eines Drehzahlkorrekturglieds 11, in dem die Differenz zwischen einer angenommen oder errechneten Drehzahl und der vom Motormodell 6a errechneten Flussgeschwindigkeit $\omega_{flux}$ gebildet wird, die ermittelte Drehzahl an die tatsächliche Rotorgerschwindigkeit annähert bis das Drehzahlkorrekturglied 11 den Wert Null annimmt. Dieses Korrekturglied 11 ist in Fig. 4 als Ergebnis der im Knotenpunkt 14 erfolgten subtraktorischen Verknüpfung dargestellt und geht von der Annahme aus, dass die Geschwindigkeit des magnetischen Flusses und die Rotorgeschwindigkeit stets übereinstimmen müssen. Im Adaptionsblock 10 wird also stets die mittels des Drehzahlkorrekturglieds 11 ermittelte Differenz ggf. unter Berücksichtigung eines Korrekturfaktors zu der zuvor ermittelten Drehzahl addiert und als neue errechnete Drehzahl ausgegeben. Diese neue errechnete Drehzahl fließt dann einerseits in das Motormodell 6a ein und steht andererseits am Knotenpunkt 14 an, der aufgrund der in das Motormodell 6a eingeflossenen neuen Drehzahl auch eine neue Geschwindigkeit des magnetischen Flusses erhält und dadurch ein neues Drehzahlkorrekturglied 11 ausgibt, das den vorbeschriebenen Annäherungsprozeß durch den Adaptionsblock 10 erneut einleitet, bis schließlich das Korrekturglied 11 den Wert Null annimmt, also die Geschwindigkeit des magnetischen Flusses, wie sie aus dem Motormodell 6a ermittelt wird, und die Rotorgeschwindigkeit, also die errechnete Drehzahl des Rotors, übereinstimmen.

Innerhalb des Motormodells 6a wird die Geschwindigkeit des magnetischen Flusses durch zeitliche Ableitung der ermittelten Position des magnetischen Flusses gebildet. Leitet man die Gleichung (5) also zeitlich ab, um die Geschwindigkeit des magnetischen Flusses zu erhalten und setzt man die Gleichungen (3a) und (4a) in diese abgeleitet Gleichung (5) ein, so ergibt sich die Geschwindigkeit des magnetischen Flusses wie folgt:

$$Gleichung \qquad (6) \qquad \dot{\rho} = \omega_{Flux} = \hat{\omega} + \frac{1}{p} \cdot \frac{\upsilon_{2\beta} \cdot \hat{\psi}_{m\alpha} - \upsilon_{2\alpha} \cdot \hat{\psi}_{m\beta}}{\hat{\psi}^2{}_{m\alpha} + \hat{\psi}^2{}_{m\beta}}$$

wobei $\dfrac{1}{p} \cdot \dfrac{\upsilon_{2\beta} \cdot \hat{\psi}_{m\alpha} - \upsilon_{2\alpha} \cdot \hat{\psi}_{m\beta}}{\hat{\psi}^2{}_{m\alpha} + \hat{\psi}^2{}_{m\beta}}$ das Drehzahlkorrekturglied 11 darstellt.

Der Adaptionsblock 10 bildet Teil eines Annäherungsprozesses, bei dem die angenommene oder errechnete Drehzahl mit Hilfe des Motormodells 6a, des Drehzahlkorrekturgliedes 11 in Übereinstimmung mit der tatsächlichen Rotordrehzahl gebracht wird, bis das Drehzahlkorrekturglied zu Null wird.

Zusätzlich kann die Differenz zwischen der im Adaptionsblock 10 errechneten Rotordrehzahl und einer gemessenen Rotordrehzahl berücksichtigt werden, ein solches zusätzliches Drehzahlkorrekturglied 15 wird im Knotenpunkt 12 additiv mit dem Drehzahlkorrekturglied 11 verknüpft, was sich formelmäßig wie folgt darstellt:

$$Gleichung \qquad (7) \qquad \Delta\omega_{mess} = K_V \cdot \left(\hat{\omega} - \omega_{Rotor}\right)$$

wobei

$\Delta\omega_{mess}$ das zusätzliche Drehzahlkorrekturglied 15 bildet und $K_v$ eine Konstante.

Wenn keine gemessene Rotordrehzahl zur Verfügung steht ist dieses zusätzliche Drehzahlkorrekturglied 15 gleich Null. Kv stellt einen Verstärkungsfaktor dar, mit dem dieses zusätzliche Drehzahlkorrekturglied 15 einfließt.

Zusätzlich kann gemäß Figur 5 die Drehzahl auch mittels eines Systemdrehzahländerungskorrekturglieds 13, welches aus einem Drehzahlmodell abgeleitet sein kann, bestimmt werden. Das Verfahren unterscheidet sich von dem anhand von Figur 4 vorbeschriebenen dadurch, dass neben dem Adaptionsblock 10 ein aus dem Drehzahlmodell abgeleitetes Systemdrehzahländerungskorrekturglied 13 tritt.

Das Drehzahlmodell beinhaltet weitere Informationen über die mechanischen Zusammenhänge des Antriebssystems. Zweckmäßigerweise wird die Veränderung der Drehzahl, also die zeitliche Änderung der Rotorgeschwindigkeit durch eine mechanische Zustandsgleichung ausgedrückt, welche die vorerwähnten mechanischen Zusammenhänge berücksichtigt. Die Änderung der Drehzahl kann dabei durch folgende Gleichung im Drehzahlmodell 13 berücksichtigt werden :

$$Gleichung \qquad (8) \qquad \dot{\omega} = \frac{1}{J} \cdot \left(M - M_L\right)$$

in der

M      das antreibende Moment
$M_L$      das Lastmonent
J      das Massenträgheitsmoment der rotierenden Last sind.

Diese an sich bekannte Zustandsgleichung besagt, dass eine Drehzahländerung nur dann erfolgt, wenn das Antriebsmoment größer als das Lastmoment ist oder umgekehrt, und dass diese Änderung dann abhängig von dem Differenzmoment sowie der dem Massenträgheitsmoment der rotierenden Last ist.

Diese zusätzliche Information führt in Verbindung mit dem Adaptionsblock 10 bei sich ändernder Drehzahl schneller zum Ergebnis, bei dem die errechnete Drehzahl des Rotors der tatsächlichen Drehzahl entspricht und eignet sich somit besonders für hochdynamische Antriebsaufgaben. Das Drehzahlmodell setzt jedoch voraus, dass entsprechende mechanische oder elektrische Größen zum Beispiel durch Messen oder in anderer Weise zur Verfügung stehen. Dabei kann das Drehzahlmodell ggf. auch durch geschickt zu treffende Annahmen vereinfacht werden.

Wenn der Motor beispielsweise mit konstanter Geschwindigkeit läuft und dass Drehzahlmodell zur Ermittlung der Drehzahl herangezogen wird, dann wird die Gleichung (8) Null ergeben, so dass dann das Drehzahlmodell im eigentlichen Sinne gar nicht zur Anwendung kommt, sondern stattdessen die Drehzahl wie anhand von Figur 4 beschrieben ermittelt wird. Die Annahme, dass der Motor mit konstanter Drehzahl läuft, geht daher nicht über das anhand von Figur 4 beschriebene hinaus.

Die Gleichung (8) kann hingegen durch bestimmte Lastannahmen, beispielsweise durch den Lastzustand $M_L$ = 0 oder konst. vereinfacht werden. Das Lastmoment ist häufig nicht bekannt oder nur aufwändig ermittelbar. In vielen Fällen kann jedoch ein konstantes Lastmoment angenommen werden. Bei dieser Annahme hat das Systemdrehzahländerungskorrekturglied 13 dann folgende Form :

$$\text{Gleichung (9)} \qquad \Delta\omega_{System} = \frac{1}{J} \cdot (M - K_4)$$

wobei

$\Delta\omega_{System}$ - das Systemänderungskorrekturglied und
$K_4$ - die Konstante sind.

Die Konstante $K_4$ ist Null, wenn das Lastmoment zu Null angenommen wird. Im übrigen ist die Konstante $K_4$ für den jeweiligen Aggregattyp und -einsatz vorab zu ermitteln.
Das Antriebsmoment ist durch die Gleichung (10) bestimmt:

$$\text{Gleichung (10)} \qquad M = K_2 \cdot (\psi_{m\alpha} \cdot i_\beta - \psi_{m\beta} \cdot i_\alpha),$$

in der

$K_2$ eine Konstante ist,

Der in der Klammer stehende Therm in Gleichung (10) ist bereits aus dem Motormodell 6a bekannt. Setzt man die Gleichung (10) in die Gleichung (9) ein, so wird ersichtlich, dass man für diesen Fall (Annahme, dass das Lastmoment Null oder konstant ist) das Systemänderungskorrekturglied 13 aus dem Motormodell 6a heraus berechnen kann. Man kann also ohne weitere Messung dieses Korrekturglied 13 bestimmen und somit die Drehzahl des Rotors schneller bzw. genauer berechnen. Es ist also besonders günstig, wenn das Antriebsmoment aus den aus dem Motormodell 6a abgeleiteten Größen bestimmt werden kann.
Wird der Motor beispielweise in einem Kreiselpumpenaggregat eingesetzt, so kann das Lastmoment auf einfache Weise rechnerisch ermittelt werden, denn es ist durch die Gleichung (11) bestimmt:

$$\text{Gleichung (11)} \qquad M_L = K_1 \cdot \omega^2,$$

in der

$K_1$ eine Konstante ist,

die eine Beziehung zur Rotordrehzahl schafft. Auch hier können aus dem Motormodell 6a abgeleitete Größen in das Drehzahlmodell einfließen ohne dass weitere mechanische oder elektrische Messungen erforderlich sind.
Ungeachtet dessen, ob die Drehzahl nur mittels des Adaptionsmodells 10 oder ergänzend auch Berücksichtigung eines Drehzahlmodells ermittelt wird, kann auch eine gemessene Drehzahl mit einfließen um schneller zum gewünschten Ergebnis zu gelangen oder die Genauigkeit der errechneten Werte zu erhöhen. Eine solche schnelle und genaue Erfassung von Motorbetriebsgrößen, wie sie durch das vorbeschriebene erfindungsgemäße Verfahren erfolgen können, ist die Voraussetzung für eine dynamische und stabile Motoransteuerung.
Die vorbeschriebenen Verfahren können ohne weiteres softwaremäßig in eine digitale Motorelektronik implementiert werden. Das ständige Erfassen und Speichern der entsprechenden elektrischen Werte des Motors, also der Motorströme und Spannungen zählt heute zum angewandten Stand der Technik, diese Daten stehen also steuerungsseitig ohnehin zur Verfügung, so dass die vorliegende Erfindung ggf. ohne bauliche Veränderung innerhalb der digitalen Motorsteuerung angewendet werden kann um diese zu verbessern.

**Bezugszeichenliste**

| | |
|---|---|
| 1 | - Stator |
| 2 | - Rotor |
| 3 | - Spule |
| 4 | - Spule |
| 5 | - Permanentmagnet |
| 6 | - Motormodell 6a in Fig. |
| 7 | - Winkelkalkulator |
| 8 | - Verknüpfung |
| 9 | - Korrekturglied |
| $\alpha$ | - Richtung |
| $\beta$ | - Richtung |
| N | - Nordpol des Magneten |
| S | - Südpol des Magneten |
| 10 | - Adaptionsblock |
| 11 | - Drehzahlkorrekturglied |
| 12 | - Knotenpunkt |
| 13 | - Systemdrehzahländerungskorrekturglied |
| 14 | - Knotenpunkt |
| 15 | - zusätzliches Drehzahlkorrekturglied |

**Patentansprüche**

1. Verfahren zum Erfassen des magnetischen Flusses des Rotors, der Rotorposition und/oder der Drehzahl des Rotors in einem Ein- oder Mehrphasenpermanentmagnet- oder -synchronmotor oder -generator unter Verwendung der Statorspannungsgleichungen

$$Gleichung \quad (1) \qquad L \cdot \dot{i}_{\alpha} \quad = \quad -R \cdot i_{\alpha} + p \cdot \omega \cdot \psi_{m\beta} + u_{\alpha}$$

$$Gleichung \quad (2) \qquad L \cdot \dot{i}_{\beta} \quad = \quad -R \cdot i_{\beta} - p \cdot \omega \cdot \psi_{m\alpha} + u_{\beta}$$

in denen

L die Induktivität
$i_{\alpha}$ der Strom in Richtung $\alpha$
$i_{\beta}$ der Strom in Richtung $\beta$
$\dot{i}_{\alpha}$ die zeitliche Ableitung des Stroms in Richtung $\alpha$
$\dot{i}_{\beta}$ die zeitliche Ableitung des Stroms in Richtung $\beta$
R der ohmsche Widerstand
p die Polpaarzahl
$\omega$ die Drehzahl des Rotors
$\psi_{ma}$ der magnetische Fluss in Richtung $\alpha$
$\psi m_{\beta}$ der magnetische Fluss in Richtung $\beta$
$u_{\alpha}$ die Spannung in Richtung $\alpha$
$u_{\beta}$ die Spannung in Richtung $\beta$ sind,

**dadurch gekennzeichnet, dass** bei den Bestimmungen die Energieverhältnisse im Magneten (5) des Rotors (2) durch folgende Energiegleichungen des Rotors berücksichtigt werden:

$$Gleichung \quad (3) \qquad \dot{\psi}_{m\alpha} = -p \cdot \omega \cdot \psi_{m\beta}$$

$$Gleichung \quad (4) \qquad \dot{\psi}_{m\beta} = p \cdot \omega \cdot \psi_{m\alpha}$$

*wobei*

$\dot{\psi}_{m\alpha}$ *die zeitliche Ableitung von* $\psi_{m\alpha}$ *und*
$\dot{\psi}m_{\beta}$ *die zeitliche Ableitung von* $\psi_{m\beta}$ *sind.*

2.  Verfahren nach Anspruch 1, **dadurch gekennzeichnet, dass** das durch die Gleichungen (1) bis (4) definierte Motormodell in Abhängigkeit von einem Vergleich zwischen errechneten Modellwerten (^) und gemessenen elektrischen und/oder mechanischen Werten mittels mindestens eines Korrekturglieds (9) korrigiert wird, so dass sich folgende Gleichungen ergeben:

$$Gleichung \quad (1a) \qquad L \cdot \dot{i}_{\alpha} = -R \cdot i_{\alpha} + p \cdot \omega \cdot \psi_{m\beta} + u_{\alpha} + \upsilon_{1\alpha}$$

$$Gleichung \quad (2a) \qquad L \cdot \dot{i}_{\beta} = -R \cdot i_{\beta} - p \cdot \omega \cdot \psi_{m\alpha} + u_{\beta} + \upsilon_{1\beta}$$

$$Gleichung \quad (3a) \qquad \dot{\psi}_{m\alpha} = -p \cdot \omega \cdot \psi_{m\beta} + \upsilon_{2\alpha}$$

$$Gleichung \quad (4a) \qquad \dot{\psi}_{m\beta} = p \cdot \omega \cdot \psi_{m\alpha} + \upsilon_{1\beta}$$

*in denen*

$\upsilon_{1\alpha}, \upsilon_{1\beta}, \upsilon_{2\alpha}, \upsilon_{1\beta}$ *Korrekturglieder sind.*

3.  Verfahren nach Anspruch 2, **dadurch gekennzeichnet, dass** die gemessenen elektrischen Werte die Motorströme sind.

4.  Verfahren nach einem der vorgehenden Ansprüche, **dadurch gekennzeichnet, dass** die Korrekturglieder (9) aus je einem Korrekturfaktor und der Differenz zwischen gemessenen und errechneten Motorströmen gebildet sind.

5.  Verfahren nach einem der vorhergehenden Ansprüche, **dadurch gekennzeichnet, dass** die Korrekturglieder (9) in den Gleichungen (3a) und (4a) in der einen Phase mittels der Differenz zwischen gemessenen und errechneten Strömen der anderen Phase gebildet wird, wobei das Korrekturglied in Gleichung (3a) mit negativem Vorzeichen eingeht.

6.  Verfahren nach einem der vorhergehenden Ansprüche, **dadurch gekennzeichnet, dass** die Drehzahl sensorisch erfasst wird.

7.  Verfahren nach Anspruch 6, **dadurch gekennzeichnet, dass** die Drehzahl mit Hilfe eines Hallsensors ermittelt wird.

8.  Verfahren nach einem der vorhergehenden Ansprüche, **dadurch gekennzeichnet, dass** die Drehzahl rechnerisch ermittelt wird, derart, dass die Differenz zwischen der Flussgeschwindigkeit und einer angenommenen Rotorgeschwindigkeit oder daraus abgeleiteter Größen als Drehzahlkorrekturglied (11) gebildet wird und die aktuelle Drehzahl durch einen Annäherungsprozeß daraus ermittelt wird.

9.  Verfahren nach Anspruch 8, **dadurch gekennzeichnet, dass** das Drehzahlkorrekturglied (11) mittels einer Drehzahlmessung korrigiert wird.

10. Verfahren nach einem der vorhergehenden Ansprüche, **dadurch gekennzeichnet, dass** die angenommene Rotordrehzahl mittels des Drehzahlkorrekturglieds (11) in einem Adapterblock (10) der aktuellen Drehzahl angepasst wird.

11. Verfahren nach einem der vorhergehenden Ansprüche, **dadurch gekennzeichnet, dass** die angenommene Drehzahl mittels des Drehzahlkorrekturglieds (11) in einem Drehzahlmodell an die aktuelle Drehzahl angepasst wird.

12. Verfahren nach einem der vorhergehenden Ansprüche, **dadurch gekennzeichnet, dass** zur Ermittlung der Flussgeschwindigkeit die Position des magnetischen Flusses und zwar mittels der Gleichung

$$Gleichung \qquad (5) \qquad \rho = \frac{1}{p} \cdot Arctg \left( \frac{\psi\, m\, \beta}{\psi\, m\, \alpha} \right)$$

bestimmt wird.

13. Verfahren nach Anspruch 12, **dadurch gekennzeichnet, dass** die Gleichung (5) zeitlich abgeleitet und die Gleichungen (3a) und (4a) (zur rechnerischen Ermittlung der Drehzahl) in die abgeleitete Gleichung (5) eingesetzt werden.

14. Verfahren nach Anspruch 11, **dadurch gekennzeichnet, dass** im Drehzahlmodell die zeitliche Ableitung, vorzugsweise der ersten Ordnung, der Drehzahl verwendet wird.

15. Verfahren nach einem der vorhergehenden Ansprüche, **dadurch gekennzeichnet, dass** das Drehzahlmodell durch eine mechanische Zustandsgleichung vorzugsweise der Form

$$Gleichung\ (8) \qquad \dot{\omega} = \frac{1}{J} \cdot (M - M_L),$$

in der

M das antreibende Moment
$M_L$ das Lastmoment
J das Massenträgheitsmoment der rotierenden Last sind,

gebildet ist.

16. Verfahren nach Anspruch 15, **dadurch gekennzeichnet, dass** das Lastmoment gleich Null gesetzt wird.

17. Verfahren nach Anspruch 16, **dadurch gekennzeichnet, dass** auch das Antriebsmoment gleich Null gesetzt wird.

18. Verfahren nach einem der vorhergehenden Ansprüche, **dadurch gekennzeichnet, dass** das Lastmoment durch die

$$Gleichung\ (11) \qquad M_L = K_1 \cdot \omega^2,$$

*in der*

$K_1$ *eine Konstante ist,*

gebildet ist.

19. Verfahren nach einem der vorhergehenden Ansprüche, **dadurch gekennzeichnet, dass** das Antriebsmoment durch die

$$Gleichung\ (10) \qquad M = K_2 \cdot \left(\psi_{m\alpha} \cdot i_\beta - \psi_{m\beta} \cdot i_\alpha\right),$$

*in der*

$K_2$ *eine Konstante ist,*

definiert ist.

**Claims**

1. A method for detecting the magnetic flux of the rotor, the rotor position and/or the speed of the rotor, in a single-phase or multiphase permanent magnet motor or in a single-phase or multiphase synchronous motor or in a single-phase or multiphase generator, whilst applying the stator voltage equations

$$Equation \quad (1) \qquad L \cdot \dot{i}_\alpha \;\; = \;\; -R \cdot i_\alpha + p \cdot \omega \cdot \psi_{m\beta} + u_\alpha$$

$$Equation \quad (2) \qquad L \cdot \dot{i}_\beta \;\; = \;\; -R \cdot i_\beta - p \cdot \omega \cdot \psi_{m\alpha} + u_\beta$$

*in which*

*L is the inductance*
$i_\alpha$ *the current in the direction $\alpha$*
$i_\beta$ *the current in the direction $\beta$*
$\dot{i}_\alpha$ *the temporal derivative of the current in the direction $\alpha$*
$\dot{i}_\beta$ *the temporal derivative of the current in the direction $\beta$*
*R the ohmic resistance*
*p the pole pair number*
*$\omega$ the speed of the rotor*
$\psi_{m\alpha}$ *the magnetic flux in the direction $\alpha$*
$\psi{m}_\beta$ *the magnetic flux in the direction $\beta$*
$u_\alpha$ *the voltage in the direction $\alpha$*
$u_\beta$ *the voltage in the direction $\beta$*

**characterised in that** with regard to the evaluations, the energy conditions in the magnet (5) of the rotor (2) are taken into account by way of the following energy equations:

$$Equation \quad (3) \qquad \dot{\psi}_{m\alpha} = -p \cdot \omega \cdot \psi_{m\beta}$$

$$Equation \quad (4) \qquad \dot{\psi}_{m\beta} = p \cdot \omega \cdot \psi_{m\alpha}$$

wherein

$\dot{\psi}_{m\alpha}$ *is the temporal derivative of $\psi_{m\alpha}$ and*
$\dot{\psi}{m}_\beta$ *the temporal derivative of $\psi_{m\beta}$.*

2. Method according to claim 1, **characterised in that** the motor model which is defined by the equations (1) to (4) is corrected in dependence on a comparison between computed model values (^) and measured electrical and/or mechanical values, by way of at least one correction term (9), so that the following equations result:

$$Equation \quad (1a) \quad L \cdot \dot{i}_\alpha = -R \cdot i_\alpha + p \cdot \omega \cdot \psi_{m\beta} + u_\alpha + \upsilon_{1\alpha}$$

$$Equation \quad (2a) \quad L \cdot \dot{i}_\beta = -R \cdot i_\beta - p \cdot \omega \cdot \psi_{m\alpha} + u_\beta + \upsilon_{1\beta}$$

$$Equation \quad (3a) \quad \dot{\psi}_{m\alpha} = -p \cdot \omega \cdot \psi_{m\beta} + \upsilon_{2\alpha}$$

$$Equation \quad (4a) \quad \dot{\psi}_{m\beta} = p \cdot \omega \cdot \psi_{m\alpha} + \upsilon_{1\beta}$$

*in which*

$\upsilon_{1\alpha}, \upsilon_{1\beta}, \upsilon_{2\alpha}, \upsilon_{1\beta}$ are *correction terms.*

3. A method according to claim 2, **characterised in that** the measured electrical values are the motor currents.

4. A method according to one of the preceding claims, **characterised in that** the correction terms (9) are formed in each case from one correction factor and the difference between measured and computed motor currents.

5. A method according to one of the preceding claims, **characterised in that** the correction terms (9) in the Equations (3a) and (4a) in the one phase are formed by way of the difference between the measured and the computed currents of the other phase, wherein the correction term enters the equation (3a) with a negative sign.

6. A method according to one of the preceding claims, **characterised in that** the speed is detected sensorically.

7. A method according to claim 6, **characterised in that** the speed is determined with the help of a Hall sensor

8. A method according to one of the preceding claims, **characterised in that** the speed is determined by computation, in a manner such that the difference between the flux speed and an assumed rotor speed or variables derived therefrom is formed as a speed correction term (11), and the current speed is determined by an approximation process from this.

9. A method according to claim 8, **characterised in that** the speed correction term (11) is corrected by way of a speed measurement.

10. A method according to one of the preceding claims, **characterised in that** the assumed rotor speed is adapted to the current speed in an adapter block (10) by way of the speed correction term (11).

11. A method according to one of the preceding claims, **characterised in that** the assumed speed is adapted to the current speed in a speed model by way of the speed correction term (11).

12. A method according to one of the preceding claims, **characterised in that** the position of the magnetic flux is determined for determining the flux speed, and specifically by way of the equation

$$Equation \quad (5) \quad \rho = \frac{1}{p} \cdot Arctg \left( \frac{\psi m \beta}{\psi m \alpha} \right)$$

13. A method according to claim 12, **characterised in that** the equation (5) is differentiated with regard to time, and the equations (3a) and 4(a) (for computational evaluation of the speed) are substituted into the differentiated equation (5).

14. A method according to claim 11, **characterised in that** the temporal derivative of the speed, preferably of the first order, is used in the speed model.

**15.** A method according to one of the preceding claims, **characterised in that** the speed model is formed by a mechanical equation of state, preferably of the form

$$Equation\,(8) \qquad \dot{\omega} = \frac{1}{J} \cdot (M - M_L),$$

in which

M is the driving moment
$M_L$ the load moment
J the moment of inertia of the rotating load.

**16.** A method according to claim 15, **characterised in that** the load moment is equated to zero.

**17.** A method according to claim 16, **characterised in that** the drive moment is equated to zero.

**18.** A method according to one of the preceding claims, **characterised in that** the load moment is formed by the equation

$$Equation\,(11) \qquad M_L = K_1 \cdot \omega^2,$$

in which

$K_1$ is a constant.

**19.** A method according to one of the preceding claims, **characterised in that** the drive moment is defined by the equation

$$Equation\,(10) \qquad M = K_2 \cdot (\psi_{m\alpha} \cdot i_\beta - \psi_{m\beta} \cdot i_\alpha),$$

in which

$K_2$ is a constant.

**Revendications**

**1.** Méthode de captage du flux magnétique du rotor, de la position du rotor et/ou de la vitesse rotative du rotor dans un moteur ou générateur monophasé ou polyphasé à aimant permanent ou synchrone, utilisant les équations des tensions du stator

$$\text{équation (1)} \quad L \cdot \dot{i}_\alpha = -R \cdot i_\alpha + p \cdot \omega \cdot \psi_{m\beta} + u_\alpha$$

$$\text{équation (2)} \quad L \cdot \dot{i}_\beta = -R \cdot i_\beta - p \cdot \omega \cdot \psi_{m\alpha} + u_\beta$$

dans lesquelles signifient

L l'inductance
$i_\alpha$ le courant dans la direction $\alpha$
$i_\beta$ le courant dans la direction $\beta$

$\dot{i}_\alpha$ la dérivée par rapport au temps du courant dans la direction $\alpha$

$\dot{i}_\beta$ la dérivée par rapport au temps du courant dans la direction $\beta$

R la résistance ohmique

p le nombre de paires de pôles

$\omega$ la vitesse rotative du rotor

$\psi_{m\alpha}$ le flux magnétique dans la direction a

$\psi_{m\beta}$ le flux magnétique dans la direction $\beta$

$U_\alpha$ la tension dans la direction $\alpha$

$U_\beta$ la tension dans la direction $\beta$,

**caractérisée en ce que**, lors des captages, les situations d'énergie dans l'aimant (5) du rotor (2) sont pris en compte par les équations d'énergie suivantes du rotor:

$$\text{équation (3)} \qquad \dot{\psi}_{m\alpha} = - p \cdot \omega \cdot \psi_{m\beta}$$

$$\text{équation (4)} \qquad \dot{\psi}_{m\beta} = p \cdot \omega \cdot \psi_{m\alpha}$$

dans lesquelles signifient

$\dot{\psi}_{m\alpha}$ la dérivée par rapport au temps de $\psi_{m\alpha}$ et

$\dot{\psi}_{m\beta}$ la dérivée par rapport au temps de $\psi_{m\beta}$.

2. Méthode selon la revendication 1, **caractérisée en ce que** la modélisation de moteur définie par les équations (1) à (4) est corrigée en fonction d'une comparaison entre des valeurs de modélisation calculées (^) et des valeurs électriques et/ou mécaniques mesurées, par au moins un élément de correction (9) si bien qu'il s'en suive les équations suivantes

$$\text{équation (1a)} \qquad L \cdot \dot{i}_\alpha = - R \cdot i_\alpha + p \cdot \omega \cdot \psi_{m\beta} + u_\alpha + \upsilon_{1\alpha}$$

$$\text{équation (2a)} \qquad L \cdot \dot{i}_\beta = - R \cdot i_\beta - p \cdot \omega \cdot \psi_{m\alpha} + u_\beta + \upsilon_{1\beta}$$

$$\text{équation (3a)} \qquad \dot{\psi}_{m\alpha} = - p \cdot \omega \cdot \psi_{m\beta} + \upsilon_{2\alpha}$$

$$\text{équation (4a)} \qquad \dot{\psi}_{m\beta} = p \cdot \omega \cdot \psi_{m\alpha} + \upsilon_{1\beta}$$

dans lesquelles

$\upsilon_{1\alpha}, \upsilon_{1\beta}, \upsilon_{2\alpha}, \upsilon_{1\beta}$ sont des éléments de correction.

3. Méthode selon la revendication 2, **caractérisée en ce que** les valeurs électriques mesurées sont des courants de moteur.

4. Méthode selon l'une des revendications précédentes, **caractérisée en ce que** les éléments de correction (9) sont formés par un facteur de correction respectif et la différence entre les courants de moteur mesurés et calculés.

5. Méthode selon l'une des revendications précédentes, **caractérisée en ce que** les éléments de correction (9) dans les équations (3a) et (4a) sont formés dans l'une des phases par la différence entre les courants mesurés et calculés de l'autre phase, l'élément de correction entrant dans l'équation (3a) avec un signe négatif.

**6.** Méthode selon l'une des revendications précédentes, **caractérisée en ce que** la vitesse rotative est captée par capteur.

**7.** Méthode selon la revendication 6, **caractérisée en ce que** la vitesse rotative est captée par un capteur à effet Hall.

**8.** Méthode selon l'une des revendications précédentes, **caractérisée en ce que** la vitesse rotative est obtenue par des calculs en formant la différence entre la vitesse de flux et une vitesse de rotor supposée ou des grandeurs en déduites comme élément de correction de vitesse rotative (11) et que la vitesse rotative actuelle en est déduite par un procédé d'approximation.

**9.** Méthode selon la revendication 8, **caractérisée en ce que** l'élément de correction de vitesse rotative (11) est corrigée par un mesurage de vitesse rotative.

**10.** Méthode selon l'une des revendications précédentes, **caractérisée en ce que** la vitesse rotative de rotor supposée est adaptée à la vitesse rotative actuelle à l'aide de l'élément de correction de vitesse rotative (11) dans un bloc d'adaptateur (10).

**11.** Méthode selon l'une des revendications précédentes, **caractérisée en ce que** la vitesse rotative supposée est adaptée à la vitesse rotative actuelle à l'aide de l'élément de correction de vitesse rotative (11) dans une modélisation de vitesse rotative.

**12.** Méthode selon l'une des revendications précédentes, **caractérisée en ce que**, pour déterminer la vitesse de flux, la position du flux magnétique est déterminée, et cela à l'aide de l'équation

$$\text{équation (5)} \quad \rho = \frac{1}{p} \cdot \text{Arctg}\left(\frac{\psi_{m\beta}}{\psi_{m\alpha}}\right)$$

**13.** Méthode selon la revendication 12, **caractérisée en ce que** l'équation (5) est dérivée par rapport au temps et que les équations (3a) et (4a) (pour déterminer la vitesse rotative par des calculs) sont introduites dans l'équation dérivée (5).

**14.** Méthode selon la revendication 11, **caractérisée en ce que**, dans la modélisation de vitesse rotative, on utilise la dérivation par rapport au temps de la vitesse rotative, de préférence du premier ordre.

**15.** Méthode selon l'une des revendications précédentes, **caractérisée en ce que** la modélisation de vitesse rotative est formée par une équation d'état mécanique, de préférence ayant la forme

$$\text{équation (8)} \quad \dot{\omega} = \frac{1}{J} \cdot (M - M_L)$$

dans laquelle signifient

M le moment entraînant
$M_L$ le moment de charge
J le moment d'inertie dû à la masse de la charge rotative.

**16.** Méthode selon la revendication 15, **caractérisée en ce que** le moment de charge est mis à zéro.

**17.** Méthode selon la revendication 16, **caractérisée en ce que** aussi le moment d'entraînement est mis à zéro.

**18.** Méthode selon l'une des revendications précédentes, **caractérisée en ce que** le moment de charge est formé par

l'équation (11) $\qquad M_L = K_1 \cdot \omega^2$

dans laquelle $K_1$ est une constante.

**19.** Méthode selon l'une des revendications précédentes, **caractérisée en ce que** le moment d'entraînement est défini par

l'équation (10) $\qquad M = K_2 \cdot (\psi_{m\alpha} \cdot i_\beta - \psi_{m\beta} \cdot i_\alpha)$

dans laquelle $K_2$ est une constante.

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- US 20010017529 A1
- WO 9965137 A1
- US 5729102 A1